# FASCICULE DE BREVET EUROPEEN

(11) **EP 4 168 245 B1**
(45) Date de publication et mention de la délivrance du brevet: **04.09.2024**
(21) Numéro de dépôt: 21736638.4
(22) Date de dépôt: 10.06.2021
(51) Int. Cl.: B29D 99/00, B29C 70/24, B29C 70/48, B29C 37/00, B29C 70/54, B29C 65/00

(54) **PROCEDE DE FABRICATION D'UNE PIECE COMPOSITE POUR TURBOMACHINE**
VERFAHREN ZUR HERSTELLUNG EINES VERBUNDTEILS FÜR EINE TURBOMASCHINE
METHOD FOR MANUFACTURING A COMPOSITE PART FOR A TURBOMACHINE

(30) Priorité: 18.06.2020 FR 2006391
(43) Date de publication de la demande: 26.04.2023
(73) Titulaire: SAFRAN AIRCRAFT ENGINES, 75015 Paris (FR)
(72) Inventeur: PERLIN, Matthieu Patrick Jean Roger, 77550 Moissy-Cramayel (FR); BOUCHAUD, Arthur, 77550 MOISSY-CRAMAYEL (FR); PLANTE, Romain, 77550 MOISSY-CRAMAYEL (FR)
(74) Mandataire: Gevers & Orès
(86) Numéro de dépôt international: PCT/FR2021/051042
(87) Numéro de publication internationale: WO 2021/255368

(56) Documents cités:
- WO-A1-2020/043980
- FR-A1- 2 914 877

## Description

### Domaine technique de l'invention

La présente invention concerne un procédé de fabrication d'une pièce en matériau composite pour une turbomachine, en particulier d'aéronef.

### Arrière-plan technique

L'état de la technique comprend notamment les documents FR-A1-2 956 057, FR-A1-3 029 134, FR-A1-3 051 386, WO-A1-2020/043980 et FR-A1-2 914 877. WO-A1-2020/043980 divulgue les caractéristiques du préambule de la revendication 1.

L'utilisation de matériaux composites est avantageuse dans l'industrie aéronautique notamment car ces matériaux ont des performances mécaniques intéressantes pour des masses relativement faibles.

Un procédé de fabrication d'une pièce composite pour l'industrie aéronautique, qui est bien connu de l'homme du métier, est le procédé de moulage RTM dont les initiales font référence à l'acronyme anglo-saxon de *Resin Transfer Molding.*

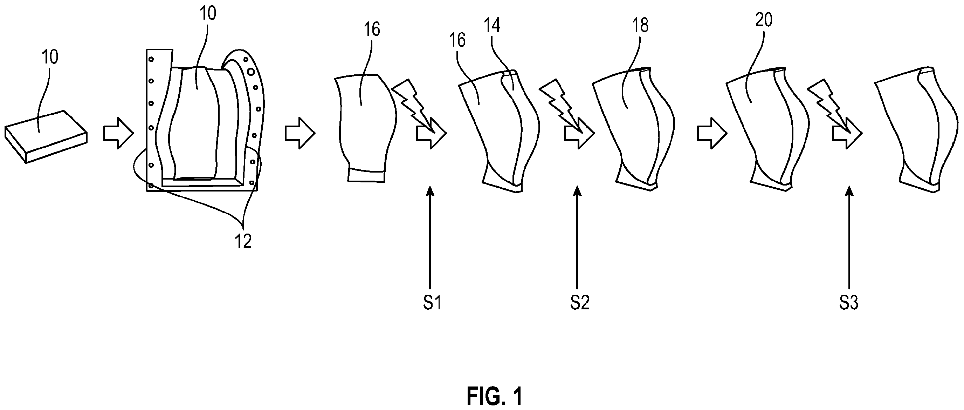

Il s'agit d'un procédé de réalisation d'une pièce en matériau composite à base de fibres imprégnées de résine. Un tel procédé est par exemple utilisé pour fabriquer une aube de soufflante et comporte plusieurs étapes successives illustrées à la figure 1.

On commence par réaliser le tissage de fibres pour obtenir une ébauche de préforme en trois dimensions, puis on découpe l'ébauche pour obtenir une préforme 10 présentant sensiblement la forme de l'aube à obtenir. Cette préforme est alors disposée dans un moule d'injection 12, qui est refermé. Puis on injecte de la résine à l'état liquide en maintenant une pression sur la résine injectée pendant que l'on effectue la polymérisation de la résine par chauffage. Les résines utilisées sont des résines très fluides qui sont à même de bien pénétrer les fibres de la préforme, même lorsqu'elles sont injectées sous une pression réduite. Pendant la polymérisation, sous l'effet de la chaleur, la résine injectée passe successivement de l'état liquide à l'état gélifié et enfin à l'état solide.

Le matériau composite de l'aube est relativement fragile, et en particulier sensible aux chocs, et il est connu de le protéger au moyen d'un bouclier métallique 14 qui est rapporté et fixé sur le bord d'attaque de la pale.

Le bouclier peut être fixé à la pale en le positionnant sur la préforme 10, dans le moule 12, de façon à ce qu'il soit solidarisé à l'aube par la résine. La résine injectée imprègne la préforme et vient en effet au contact du bouclier pour assurer sa solidarisation à la pale après polymérisation et durcissement.

A la sortie du moule, l'aube 16 subit plusieurs opérations de finition. L'aube 16 est démoulée et ébavurée et subit une première opération d'usinage par sablage S1 afin d'adapter son état de surface à la prochaine opération qui est une étape de collage. Des bandes de tissu anti-usure et un film de polyuréthane (voire également le bouclier 14 s'il n'a pas déjà été collé) sont collés sur l'aube 16. L'aube 16 subit une seconde opération d'usinage par sablage S2 afin d'adapter son état de surface à la prochaine opération. L'aube 16 est revêtue d'un primaire d'accrochage 18 puis d'une peinture anti-érosion 20 avant de subir une dernière étape d'usinage S3 par toilage ou retouche.

Pour ne pas endommager l'aube et en particulier pour garantir ses propriétés mécaniques, une épaisseur maximale Emax de matière retirée par usinage ne doit pas être dépassée, notamment sur les faces intrados et extrados moulées de l'aube. Cette épaisseur est relativement faible et par exemple inférieure ou égale à 200µm.

Dans la technique actuelle, il est difficile de contrôler les épaisseurs de matière retirée lors des opérations d'usinage. Une solution consiste par exemple à peser l'aube avant et après chaque opération d'usinage pour calculer la masse de matière enlevée et en déduire l'épaisseur de matière enlevée en fonction des surfaces cumulées des zones usinées de l'aube. Cependant, cette solution n'est pas idéale car elle prend comme hypothèse que l'usinage de ces zones est homogène et que l'épaisseur de matière retirée est constante dans ces zones, ce qui n'est pas forcément le cas et ce qui est difficilement vérifiable.

Par ailleurs, la masse d'une aube est très supérieure à la masse de matière retirée par usinage (qui représente environ moins de 0,01% de la masse de l'aube). La solution ne peut donc pas être suffisamment précise et il est donc nécessaire de prendre une marge de sécurité en limitant par exemple le nombre d'opérations d'usinage et en particulier de sablage par aube. Si on considère qu'une opération de sablage retire en général une épaisseur de matière E et que la marge de sécurité Ms adoptée doit être de 50%, alors le nombre maximal Nmax d'opérations d'usinage par aube sera par exemple de : Nmax = Ms. Emax / E = 50% . Emax / E
Dans le cas par exemple où Emax serait de 40µm et E serait de 10µm, le nombre Nmax d'opérations d'usinage par aube serait de 2.

Les solutions possibles de la technique actuelle ne sont donc pas optimales pour contrôler les épaisseurs de matière retirée lors des opérations d'usinage et la présente invention propose une solution à ce problème, qui est simple, efficace et économique.

### Résumé de l'invention

L'invention propose un procédé de fabrication d'une pièce en matériau composite pour une turbomachine, en particulier d'aéronef, comprenant les étapes consistant à :
b) disposer une préforme réalisée par tissage de fibres en trois dimensions dans un moule,
c) injecter de la résine polymérisable dans le moule afin qu'elle imprègne la préforme de façon à former la pièce après solidification,
d) usiner la pièce,
e) contrôler visuellement la pièce par un opérateur pour valider au moins un critère de conformité,
caractérisé en ce que l'étape b) est précédée d'une étape a) lors de laquelle au moins un revêtement de conformité est déposé dans le moule, ce revêtement ayant une épaisseur calibrée et au moins un aspect visuel identifiable par un opérateur, ce revêtement étant destiné à recouvrir au moins une zone de la préforme et à être solidarisé à celle-ci par la résine à l'issue de l'étape c),
et en ce que l'étape e) comprend la vérification par l'opérateur de la présence dudit aspect dans ladite zone, de façon à valider ledit critère de conformité.

Le procédé selon l'invention comprend donc 5 étapes et en particulier une étape préliminaire qui est prévue pour faciliter et optimiser la dernière étape de contrôle et de vérification de la conformité de la pièce.

Le revêtement de conformité est une couche supplémentaire qui est destinée à être appliquée sur la pièce spécifiquement pour contrôler la conformité de la pièce. Pour cela, le revêtement est déposé dans le moule de fabrication de la pièce avant le dépôt de la préforme dans le moule et l'injection de la résine dans le moule. La résine va alors imprégnée la préforme et assurer la solidification de la pièce ainsi que la solidarisation du revêtement à la pièce.

Ce revêtement est situé sur une ou plusieurs zones de la pièce, en particulier celle(s) destinée(s) à subir une ou plusieurs opérations d'usinage. Une des particularités de ce revêtement est qu'il a une épaisseur calibrée, c'est-à-dire prédéterminée et constante. Une autre de ses particularités est qu'il a au moins un aspect visible par l'opérateur lors de l'étape e) de contrôle.

On comprend ainsi que, lors de l'étape e) de contrôle, si l'opérateur repère visuellement l'aspect du revêtement sur toute la zone usinée ou toutes les zones usinées, cela signifie que les opérations d'usinage de cette/ces zone(s) n'ont pas entraîné une épaisseur de matière retirée supérieure à l'épaisseur calibrée du revêtement. On comprend aussi que cette épaisseur calibrée est égale à l'épaisseur maximale de matière qui doit être retirée par usinage sur l'aube et donc que, dans ce cas, l'aube est conforme à ce critère de conformité car elle n'a pas été affectée négativement par les opérations d'usinage.

Dans le cas contraire où, lors de l'étape e), l'opérateur identifie visuellement des manques (absences) de l'aspect du revêtement sur la ou les zone(s) usinée(s), cela signifie que les opérations d'usinages de cette/ces zone(s) ont entraîné une épaisseur de matière retirée supérieure à l'épaisseur calibrée du revêtement et donc supérieure à l'épaisseur maximale de matière qui doit être retirée par usinage sur l'aube. L'aube n'est donc pas conforme au critère de conformité et doit donc être mise au rebut car susceptible d'avoir des propriétés mécaniques altérées.

Le procédé selon l'invention peut comprendre une ou plusieurs des caractéristiques suivantes, prises isolément les unes des autres ou en combinaison les unes avec les autres :
- ledit revêtement a une épaisseur constante comprise entre 10 et 100µm, de préférence entre 20 et 60µm, et plus préférentiellement de 40µm ;
- ledit aspect visuel est une couleur ou comprend une répétition d'un même motif de surface ;
- ledit revêtement est déposé dans le moule par étalement ou projection ;
- ledit revêtement est choisi parmi une peinture colorée, une résine colorée, un film de colle, une toile, ou une combinaison de ceux-ci ;
- la toile est réalisée à partir de fibres de verre ou de carbone, et est de préférence tissée, et est de préférence imprégnée d'une résine polymérisable ;
- ledit revêtement comprend au moins un composé polymérisable et dont la polymérisation est initiée avant l'étape b) ;
- ledit revêtement est déposé sur un fond du moule ;
- ledit usinage est réalisé par sablage ;
- le procédé comprend, avant l'étape a), une étape i) de positionnement de cales dans le moule, ces cales ayant chacune une épaisseur égale à ladite épaisseur calibrée et étant destinée à définir entre elles un espace de dépôt dudit revêtement, et entre les étapes a) et b), une étape ii) de retrait des cales du moule ;
- le procédé comprend, entre les étapes a) et b), une étape iii) de polymérisation au moins partielle dudit revêtement ;
- le procédé comprend, entre les étapes a) et b), une étape iv) de vérification de l'épaisseur dudit revêtement, par exemple par Courants de Foucault ;
- la pièce est une aube ou un carter.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective d'une aube composite de turbomachine d'aéronef, qui subit plusieurs opérations au cours d'un procédé de fabrication selon la technique antérieure,
[Fig.2] la figure 2 est une vue schématique en perspective d'une aube composite de turbomachine d'aéronef,
[Fig.3] la figure 3 est un schéma bloc montrant des étapes d'un procédé selon l'invention de fabrication d'une pièce de turbomachine,
[Fig.4] la figure 4 est une vue schématique en perspective d'un moule de fabrication de l'aube de la figure 2,
[Fig.5] la figure 5 comprend des vues très schématiques en coupe d'une aube au cours de certaines des opérations illustrées à la figure 1,
[Fig.6a-6b] les figures 6a et 6b sont respectivement une vue schématique en perspective et en coupe d'un moule du type de celui ide la figure 4, dans lequel est déposé un revêtement de conformité au sens de l'invention,
[Fig.7a-7b] les figures 7a et 7b sont des vues schématiques en coupe d'un moule dans lequel est déposé un revêtement de conformité selon deux variantes de réalisation de l'invention,
[Fig.8a-8b] les figures 8a et 8b sont des vues schématiques en coupe d'un moule dans lequel est déposé un revêtement comportant une résine notamment,
[Fig.9a-9b] les figures 9a et 9b sont des vues schématiques en coupe d'un moule dans lequel est déposé un revêtement comportant une toile préimprégnée notamment,
[Fig.10a-10b] les figures 10a et 10b sont des vues schématiques en coupe d'un moule dans lequel est déposé un revêtement comportant une colle notamment, et
[Fig.11] la figure 11 est une vue schématique en perspective d'un carter composite de turbomachine d'aéronef.

### Description détaillée de l'invention

La figure 1 a déjà été décrite dans ce qui précède.

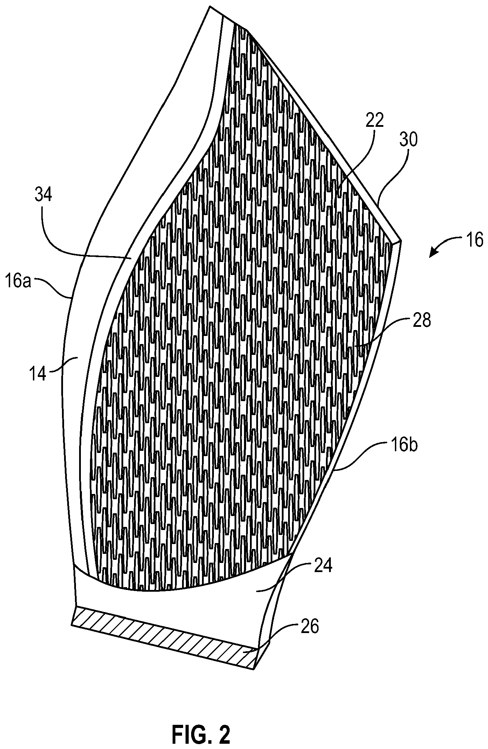

On se réfère à la figure 2 qui illustre une aube 16 en matériau composite pour une turbomachine, cette aube 16 étant par exemple une aube de soufflante ou de redresseur d'un flux secondaire dans le cas d'un turboréacteur à double flux.

L'aube 16 comprend une pale 22 reliée par une échasse 24 à un pied 26 qui a par exemple une forme en queue d'aronde et est conformé pour être engagé dans une alvéole de forme complémentaire d'un disque de rotor, afin de retenir l'aube sur ce disque.

La pale 22 comprend un bord d'attaque 16a et un bord de fuite 16b des gaz qui s'écoulent dans la turbomachine. La pale 22 a un profil aérodynamique incurvé voire vrillé et comprend un intrados 28 et un extrados 30 s'étendant entre les bords d'attaque 16a et de fuite 16b.

La pale 22 est réalisée à partir d'une préforme fibreuse 10 (cf. figure 1) obtenue par tissage en trois dimensions de fibres, par exemple en carbone.

Le bord d'attaque 16a de la pale est renforcé et protégé par un bouclier métallique 14 qui est fixé sur ce bord d'attaque 16a. Le bouclier 14 est par exemple en alliage à base de nickel, cobalt et/ou titane.

Cette fixation peut être est réalisée par co-moulage de la préforme 10 avec le bouclier 14, et d'autre part par collage du bouclier 14 au moyen d'une colle 34.

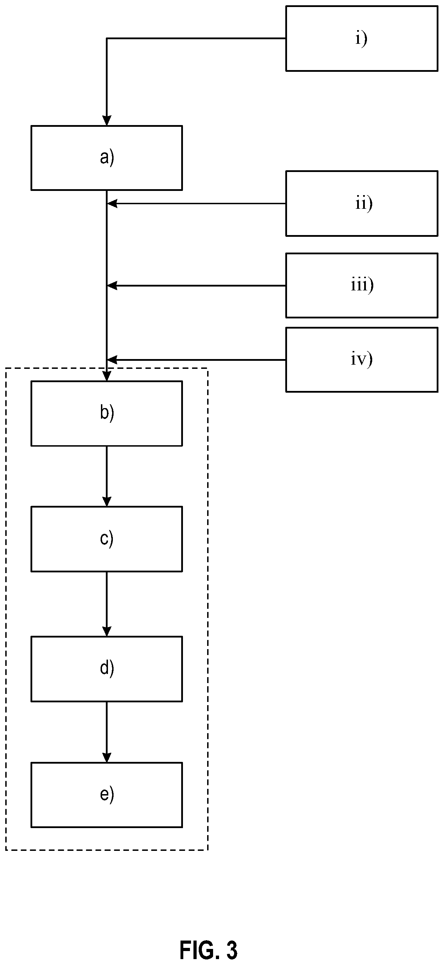

La figure 3 est un organigramme qui illustre des étapes d'un procédé de fabrication d'une aube composite 16 telle que celle représentée à la figure 2.

Les étapes b) à e), qui sont entourées par un rectangle en traits pointillés, représente un procédé de fabrication selon la technique antérieure.

La première étape b) du procédé de la technique antérieure comprend la réalisation de la préforme fibreuse 10 par tissage de fibres, de préférence en trois dimensions grâce à une machine de tissage du type Jacquard par exemple. La préforme 10 obtenue est brute et peut subir des opérations telles qu'une découpe ou une compression par exemple.

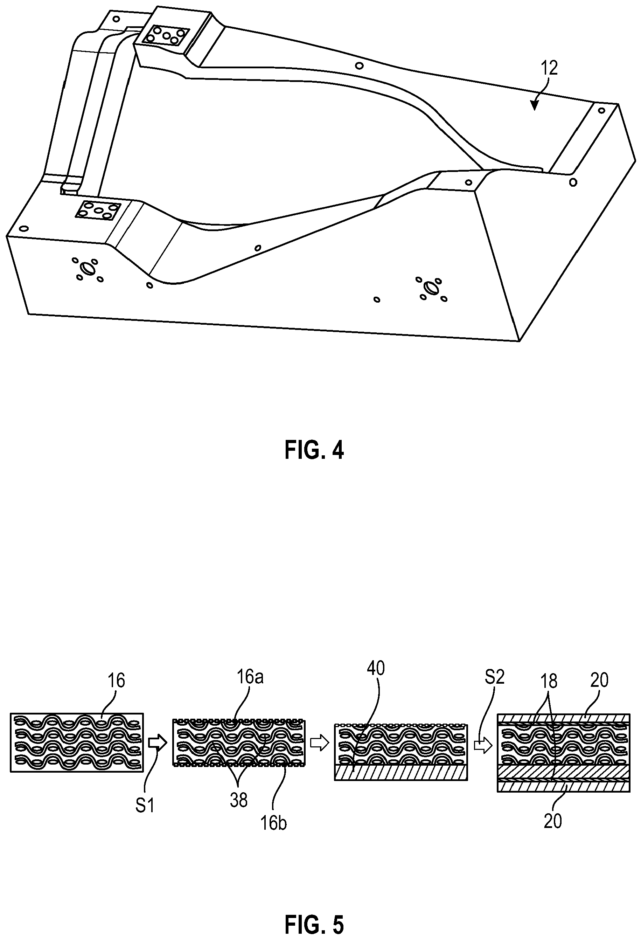

La préforme 10 est alors disposée dans le moule 12 (figure 4).

Le moule 12 est ensuite fermé, par exemple à l'aide d'un contre-moule non représenté, et est chauffé selon un cycle de chauffage prédéfini, à une température comprise entre 160 et 200°C de préférence et par exemple de 180°C.

Le procédé comprend une étape suivante c) d'injection de résine polymérisable dans le moule 12

La résine injectée dans le moule 12 est destinée à imprégner la préforme 10. La résine est par exemple une résine thermodurcissable à base époxy.

L'image de gauche à la figure 5 illustre l'état de surface de l'aube 16 en sortie du moule 12.

Le procédé comprend ensuite une étape d) d'usinage de l'aube 16, de préférence par sablage. Cela correspond à la première opération de sablage S1 évoquée dans ce qui précède et représentée à la figure 1. Dans l'exemple de la figure 5, la seconde image en partant de la gauche montre une aube 16 dont les deux faces, intrados 16a et extrados 16b, ont été usinées. Une épaisseur de matière a été retirée ce qui a mis à nues certains fibres 38 de l'aube.

Le procédé comprend ensuite une étape e) de contrôle de la pièce par un opérateur. Dans le cadre de la présente invention, ce contrôle est visuel et permet de valider au moins un critère de conformité selon lequel l'épaisseur de matière retirée lors de l'étape d) préalable d'usinage ne dépasse par un certain seul qui serait critique pour la santé de l'aube.

Le bouclier 14 peut ensuite être rapporté et fixé par collage sur le bord de la préforme 10. Le bouclier 14 a en général une forme de dièdre et définit une rainure à section en V dans lequel est inséré un bord de la préforme. La colle peut être déposée dans la rainure du bouclier et/ou sur le bord de la préforme 10.

Un film de polyuréthane 40 est ensuite déposé sur l'aube 16 (du côté de l'extrados dans l'exemple représenté) qui subit alors la seconde opération d'usinage S2 évoquée dans ce qui précède pour modifier son état de surface et en particulier l'état de surface de la zone de la pâle recouverte par le film 40. Un primaire d'accrochage 18 et une peinture anti-érosion 20 sont ensuite déposés sur chacune des faces de la pale qui subit alors des opérations d'usinage S3 de finition par toilage et de rectification.

La figure 3 montre les étapes supplémentaires, dont certains sont facultatives, préalables du procédé de fabrication selon l'invention.

L'étape b) est ainsi précédée d'une étape a) lors de laquelle au moins un revêtement de conformité 50 est déposé dans le moule 12. Ce revêtement 50 est destiné à recouvrir au moins une zone de la préforme 10 et à être solidarisé à celle-ci par la résine à l'issue de l'étape c).

Ce revêtement 50 a une épaisseur calibrée et au moins un aspect visuel identifiable par un opérateur.

On comprend donc qu'à l'étape e), l'opérateur doit vérifier la présence de cet aspect particulier dans la zone, de façon à valider la conformité de l'aube. Dans le cas contraire où cet aspect ne serait pas visible, cela signifierait que la zone recouverte par le revêtement 50 aurait été trop usinée et l'aube devrait alors être mise au rebut.

Le revêtement 50 a donc une épaisseur calibrée, c'est-à-dire maitrisée. Cela signifie que cette épaisseur est connue et constante sur toute l'étendue du revêtement. Cette épaisseur est par exemple comprise entre 10 et 100µm, de préférence entre 20 et 60µm, et plus préférentiellement de 40µm.

Dans la présente demande, on entend par « aspect visuel », un signe distinctif visible à l'œil nu qui permet d'identifier facilement les zones de l'aube revêtues par le revêtement des zones qui ne le seraient pas.

Dans un mode particulier de réalisation de l'invention, cet aspect visuel est une couleur, par exemple noire, bleue, jaune, etc., qui est naturellement différente de la couleur des autres parties ou couches de l'aube.

Dans une variante de réalisation, cet aspect visuel comprend une répétition d'un même motif de surface. Le revêtement peut par exemple comprendre un motif en chevron qui serait répété sur toute son étendue. Ce motif pourrait être obtenu par une toile par exemple, et en particulier par un motif particulier de tissage de cette toile dans le cas d'une toile tissée. En variante, ce motif pourrait être obtenu par une toile imprimé ou marqué, cette toile n'étant alors pas nécessairement tissée.

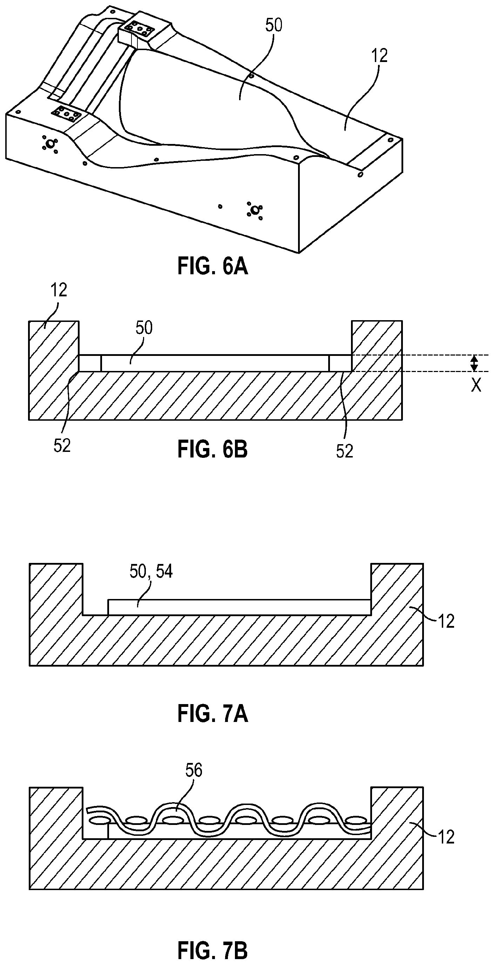

Comme cela est visible aux figures 6a et 6b, le revêtement 50 est destiné à être déposé dans le moule et par exemple sur le fond du moule, et ce par étalement ou projection. La figure 6b montre l'épaisseur X calibrée de ce revêtement 50.

Cette calibration peut par exemple être obtenue grâce aux étapes i) et ii) illustrées à la figure 3.

Avant l'étape a), le procédé comprend l'étape i) de positionnement de cales 52 dans le moule 12 (figure 6b). Ces cales 52 ont chacune une épaisseur égale à ladite épaisseur calibrée et sont destinées à définir entre elles un espace de dépôt du revêtement 50.

Entre les étapes a) et b), le procédé comprend alors l'étape ii) de retrait des cales 52 du moule 12.

Selon la nature du revêtement et comme cela sera plus en détail dans ce qui suit en relation avec des exemples plus concrets de réalisation, le revêtement peut comprendre au moins un composé polymérisable. Dans ce cas et afin de limiter le déplacement et la déformation du revêtement 50 lors des étapes b) et c), une polymérisation au moins partielle de ce composé et du revêtement peut être réalisée avant l'étape b).

Le procédé de la figure 3 montre ainsi, entre les étapes a) et b), cette étape iii) de polymérisation au moins partielle du revêtement 50. Cette polymérisation peut être réalisée par chauffage ou cuisson du revêtement. Ce chauffage ou cette cuisson peut avoir lieu avant la dépose du revêtement dans le moule 12 ou bien même après. Dans ce dernier cas, le moule sert de support au revêtement en vue de cette polymérisation.

Le procédé de la figure 3 montre une autre étape iv) facultative, entre les étapes a) et b), de vérification de l'épaisseur X du revêtement 50, par exemple par Courants de Foucault.

Les figures 7a à 10b illustrent plusieurs variantes de mise en oeuvre du procédé de fabrication.

Dans la variante de réalisation des figures 7a et 7b, le revêtement 50 est une peinture 54 de couleur prédéfinie et qui peut être éventuellement renforcée par une toile 56 de fibres tissées ou non tissées. L'aspect visuel à contrôler par l'opérateur sur l'aube finale obtenue est la couleur de la peinture.

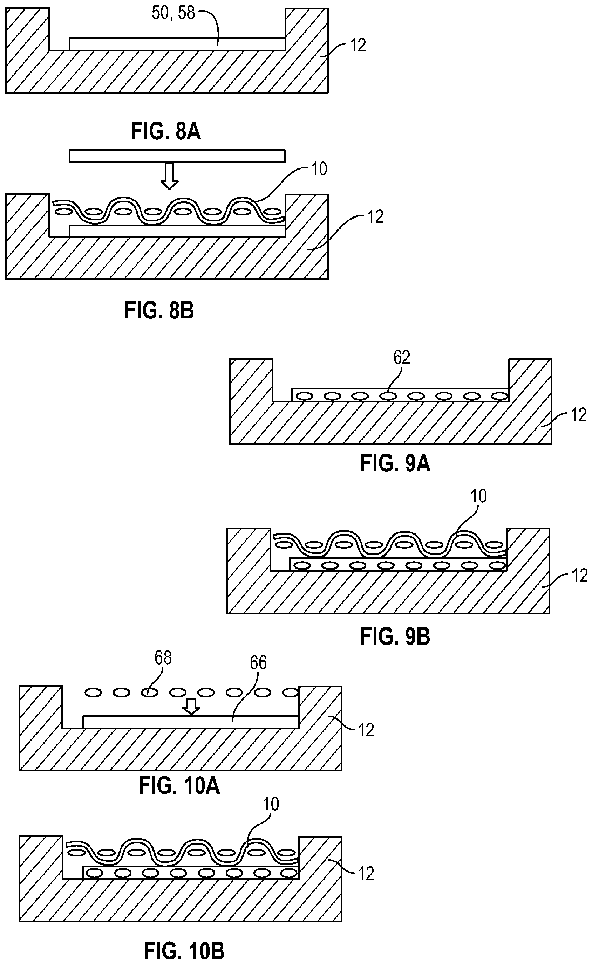

Dans la variante de réalisation des figures 8a et 8b, le revêtement 50 est une résine 58, colorée ou non, et qui peut être renforcée par une toile de fibres tissées ou non tissées. L'aspect visuel est la couleur de la résine et/ou le motif particulier de tissage de la toile par exemple.

Dans la variante de réalisation des figures 9a et 9b, le revêtement 50 est une toile 62 préimprégnée de résine et qui peut être renforcée par un tissu additionnel. L'aspect visuel est la couleur de la toile 62 ou de la résine et/ou le motif particulier du tissu par exemple.

Dans la variante de réalisation des figures 10a et 10b, le revêtement 50 est une colle 66 qui peut être renforcée par une toile et/ou un tissu 68. L'aspect visuel est la couleur de la colle et/ou le motif particulier du tissu 68 par exemple.

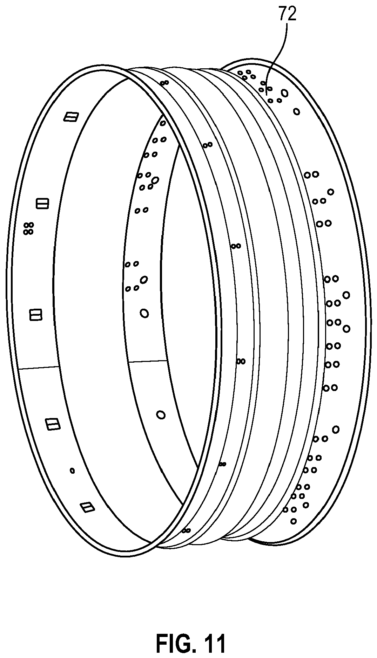

Enfin, la figure 11 montre que le procédé de fabrication selon l'invention ne s'applique pas seulement à une aube mais peut s'appliquer à d'autres pièces composites d'une turbomachine, telles qu'un carter 72 par exemple car un carter subit des opérations d'usinage en particulier de sa surface cylindrique externe.

## Revendications

1. Procédé de fabrication d'une pièce (16, 72) en matériau composite pour une turbomachine, en particulier d'aéronef, comprenant les étapes consistant à :
b) disposer une préforme (10) réalisée par tissage de fibres en trois dimensions dans un moule (12),
c) injecter de la résine polymérisable dans le moule afin qu'elle imprègne la préforme de façon à former la pièce après solidification, **caractérisé par**
d) usiner la pièce,
e) contrôler visuellement la pièce par un opérateur pour valider au moins un critère de conformité,
l'étape b) est précédée d'une étape a) lors de laquelle au moins un revêtement de conformité (50) est déposé dans le moule, ce revêtement ayant une épaisseur (X) calibrée et au moins un aspect visuel identifiable par un opérateur, ce revêtement étant destiné à recouvrir au moins une zone de la préforme et à être solidarisé à celle-ci par la résine à l'issue de l'étape c),
et en ce que l'étape e) comprend la vérification par l'opérateur de la présence dudit aspect dans ladite zone, de façon à valider ledit critère de conformité.

2. Procédé selon la revendication 1, dans lequel ledit revêtement (50) a une épaisseur (X) constante comprise entre 10 et 100µm, de préférence entre 20 et 60µm, et plus préférentiellement de 40µm.

3. Procédé selon la revendication 1 ou 2, dans lequel ledit aspect visuel est une couleur ou comprend une répétition d'un même motif de surface.

4. Procédé selon l'une des revendications précédentes, dans lequel ledit revêtement (50) est déposé dans le moule (12) par étalement ou projection.

5. Procédé selon l'une des revendications précédentes, dans lequel ledit revêtement (50) est choisi parmi une peinture colorée, une résine colorée, un film de colle, une toile, ou une combinaison de ceux-ci.

6. Procédé selon la revendication 5, dans lequel la toile est réalisée à partir de fibres de verre ou de carbone, et est de préférence tissée, et est de préférence imprégnée d'une résine polymérisable.

7. Procédé selon l'une des revendications précédentes, dans lequel ledit revêtement (50) comprend au moins un composé polymérisable et dont la polymérisation est initiée avant l'étape b).

8. Procédé selon l'une des revendications précédentes, dans lequel ledit revêtement (50) est déposé sur un fond du moule (12).

9. Procédé selon l'une des revendications précédentes, dans lequel ledit usinage est réalisé par sablage.

10. Procédé selon l'une des revendications précédentes, dans lequel il comprend, avant l'étape a), une étape i) de positionnement de cales (52) dans le moule (12), ces cales ayant chacune une épaisseur égale à ladite épaisseur calibrée et étant destinée à définir entre elles un espace de dépôt dudit revêtement (50), et entre les étapes a) et b), une étape ii) de retrait des cales du moule.

11. Procédé selon la revendication 10, dans lequel il comprend, entre les étapes a) et b), une étape iii) de polymérisation au moins partielle dudit revêtement (50).

12. Procédé selon l'une des revendications précédentes, dans lequel il comprend, entre les étapes a) et b), une étape iv) de vérification de l'épaisseur (X) dudit revêtement (50), par exemple par Courants de Foucault.

13. Procédé selon l'une des revendications précédentes, dans lequel la pièce est une aube (16) ou un carter (72).

## Patentansprüche

1. Verfahren zur Herstellung eines Teils (16, 72) aus Verbundmaterial für eine Turbomaschine, insbesondere für ein Flugzeug, das die Schritte umfasst, die darin bestehen:
b) einen Vorformling (10), der durch dreidimensionales Weben von Fasern hergestellt wurde, in einer Form (12) anzuordnen,
c) polymerisierbares Harz in die Form einzuspritzen, damit es den Vorformling so imprägniert, dass nach Verfestigung das Teil gebildet wird, **gekennzeichnet durch**
d) Bearbeiten des Teils,
e) visuelles Kontrollieren des Teils durch einen Bediener, um mindestens ein Konformitätskriterium zu validieren,
wobei Schritt b) ein Schritt a) vorausgeht, bei dem mindestens eine Konformitätsbeschichtung (50) in der Form abgeschieden wird, wobei diese Beschichtung eine kalibrierte Dicke (X) und mindestens einen visuellen Aspekt aufweist, der von einem Bediener identifiziert werden kann, wobei diese Beschichtung dazu bestimmt ist, mindestens eine Zone des Vorformlings zu bedecken und am Ende von Schritt c) durch das Harz fest mit diesem verbunden zu sein,
und **dadurch, dass** Schritt e) das Verifizieren des Vorhandenseins des Aspekts in der Zone durch den Bediener umfasst, um das Konformitätskriterium zu validieren.

2. Verfahren nach Anspruch 1, wobei die Beschichtung (50) eine konstante Dicke (X) im Bereich zwischen 10 und 100 µm, bevorzugt zwischen 20 und 60 µm und bevorzugter von 40 µm aufweist.

3. Verfahren nach Anspruch 1 oder 2, wobei der visuelle Aspekt eine Farbe ist oder eine Wiederholung desselben Oberflächenmusters umfasst.

4. Verfahren nach einem der vorstehenden Ansprüche, wobei die Beschichtung (50) durch Verteilen oder Spritzen in der Form (12) abgeschieden wird.

5. Verfahren nach einem der vorstehenden Ansprüche, wobei die Beschichtung (50) ausgewählt ist aus einem farbigen Anstrich, einem farbigen Harz, einem Klebstofffilm, einem Tuch oder einer Kombination davon.

6. Verfahren nach Anspruch 5, wobei das Tuch aus Glas- oder Kohlenstofffasern hergestellt ist und bevorzugt gewebt ist und bevorzugt mit einem polymerisierbaren Harz imprägniert ist.

7. Verfahren nach einem der vorstehenden Ansprüche, wobei die Beschichtung (50) mindestens eine Verbindung umfasst, die polymerisierbar ist und deren Polymerisation vor Schritt b) eingeleitet wird.

8. Verfahren nach einem der vorstehenden Ansprüche, wobei die Beschichtung (50) auf einem Boden der Form (12) abgeschieden wird.

9. Verfahren nach einem der vorstehenden Ansprüche, wobei dem die Bearbeitung durch Sandstrahlen erfolgt.

10. Verfahren nach einem der vorstehenden Ansprüche, wobei es vor Schritt a) einen Schritt i) des Positionierens von Keilen (52) in der Form (12), wobei diese Keile jeweils eine Dicke aufweisen, die gleich der kalibrierten Dicke ist, und dazu bestimmt sind, zwischen ihnen einen Raum zum Abscheiden der Beschichtung (50) zu definieren, und zwischen den Schritten a) und b) einen Schritt ii) des Entfernens der Keile aus der Form umfasst.

11. Verfahren nach Anspruch 10, wobei es zwischen den Schritten a) und b) einen Schritt iii) des mindestens teilweisen Polymerisierens der Beschichtung (50) umfasst.

12. Verfahren nach einem der vorstehenden Ansprüche, wobei es zwischen den Schritten a) und b) einen Schritt iv) des Verifizierens der Dicke (X) der Beschichtung (50), zum Beispiel durch Wirbelströme, umfasst.

13. Verfahren nach einem der vorstehenden Ansprüche, wobei das Teil eine Schaufel (16) oder ein Gehäuse (72) ist.

## Claims

1. A method for manufacturing a part (16, 72) made of composite material for a turbomachine, in particular of an aircraft, comprising the steps of:
b) arranging a preform (10) made by weaving fibres in three dimensions in a mould (12),
c) injecting the polymerizable resin into the mould to impregnate the preform so as to form the part after solidification, **characterised by**
d) machining the part,
e) visually checking the part by an operator to validate at least one compliance criterion,
the step b) is preceded by a step a) during which at least one compliance coating (50) is deposited in the mould, this coating having a calibrated thickness (X) and at least one visual aspect identifiable by an operator, this coating being intended to cover at least one area of the preform and to be secured thereto by the resin at the end of the step c),
and in that the step e) comprises verifying by the operator of the presence of said aspect in said area, so as to validate said compliance criterion.

2. The method according to claim 1, wherein said coating (50) has a constant thickness (X) between 10 and 100µm, preferably between 20 and 60µm, and more preferably 40µm.

3. The method according to claim 1 or 2, wherein said visual aspect is a colour or comprises a repetition of a same surface pattern.

4. The method according to any of the preceding claims, wherein said coating (50) is deposited in the mould (12) by spreading or spraying.

5. The method according to any of the preceding claims, wherein said coating (50) is selected from a coloured paint, a coloured resin, a glue film, a cloth, or a combination thereof.

6. The method according to claim 5, wherein the cloth is made from glass or carbon fibres, and is preferably woven, and is preferably impregnated with a polymerizable resin.

7. The method according to any of the preceding claims, wherein said coating (50) comprises at least one polymerizable compound and the polymerisation of which is initiated before the step b).

8. The method according to any of the preceding claims, wherein said coating (50) is deposited on a bottom of the mould (12).

9. The method according to any of the preceding claims, wherein said machining is carried out by sandblasting.

10. The method according to one of the preceding claims, wherein it comprises, before the step a), a step i) of positioning wedges (52) in the mould (12), these wedges each having a thickness equal to said calibrated thickness and being intended to define between them a space for depositing said coating (50), and between the steps a) and b), a step ii) of removing the wedges from the mould.

11. The method according to claim 10, wherein it comprises, between the steps a) and b), a step iii) of at least partially polymerising said coating (50).

12. The method according to one of the preceding claims, wherein it comprises, between the steps a) and b), a step iv) of checking the thickness (X) of said coating (50), for example by Eddy Current.

13. The method according to any of the preceding claims, wherein the part is a vane (16) or a casing (72).
